# EUROPÄISCHE PATENTANMELDUNG

(11) **EP 0 788 971 A2**
(43) Veröffentlichungstag der Anmeldung: **13.08.1997**
(21) Anmeldenummer: 96113967.2
(22) Anmeldetag: 31.08.1996
(51) Int. Cl.: B64F 1/22

(54) **Überlastsicherung für ein von einem Flugzeugschlepper ohne Schleppstange aufgenommenes Bugfahrwerk eines Flugzeuges**

(30) Priorität: 27.09.1995 DE 19535879
(71) Anmelder: MAN Gutehoffnungshütte Aktiengesellschaft, 46145 Oberhausen (DE)
(72) Erfinder: Franken, Wilhelm, Dipl.-Ing., 46487 Wesel (DE); Michaelsen, Lars Torsten, Dipl.-Ing., 58313 Herdecke (DE)

(57) **Zusammenfassung**

Die Erfindung befaßt sich mit einer Überlastsicherung für ein von einem stangenlosen Flugzeugschlepper aufgenommenes Bugfahrwerk eines Flugzeuges.

Bei der Überlastsicherung nach einem Ausführungsbeispiel ist bei dem Flugzeugschlepper innerhalb der Teleskoparme (9) der Aufnahmevorrichtung für das Bugfahrwerk eines Flugzeuges eine Überlastsicherung vorgesehen.

Diese Überlastungsicherung besteht aus Scherbolzen (28), ausgelegt entsprechend der jeweils zulässigen Bugradlast, wobei die Scherbolzen (28) über die Zylinderkolbenstangen (26) und die Zylinderrohre (30) die Teleskopspitzen (25) sichern. Zusätzlich ist jeweils ein Sicherungsbolzen (27) mit einem Sicherheitsspiel (29) innerhalb jeder Zylinderkolbenstange (28) vorgesehen. Bei Überlast, verursacht durch Zugkräfte oder durch Druckkräfte, die die für das Bugfahrwerk maximal zulässigen Belastungswerte überschreiten, und nach Abscheren der Scherbolzen (28) können sich die Zylinderkolbenstangen (26) innerhalb des Sicherheitsspieles (29) in den Zylinderrohren (30) in Längsrichtung des Flugzeugschleppers um ein bestimmtes Maß in beiden Richtungen frei bewegen.

## Beschreibung

Die Erfindung betrifft eine Überlastsicherung für ein von einem stangenlosen Flugzeugschlepper aufgenommenes Bugfahrwerk eines Flugzeuges.

Stangenlose Flugzeugschlepper werden durch elektronische und hydraulische Überwachungseinrichtungen gegen Überschreiten der maximal zulässigen auf das Bugfahrwerk des Flugzeuges seitens des Schleppers wirkenden Zug- und Druckkräfte abgesichert. Diese Sicherungen sind Bestandteil der mehr oder weniger aufwendigen elektronischen und/oder hydraulischen Steuerung der Aufnahmekinematik und des hydrodynamischen, hydrostatischen oder elektrischen Antriebssystems des Flugzeugschleppers.

Die Funktionsweise dieser Sicherheitseinrichtungen muß, zur Freigabe eines stangenlosen Flugzeugschleppers, durch ein aufwendiges Meßprogramm den einzelnen Flugzeugherstellern nachgewiesen werden. Hierbei werden durch verschiedene, vom Flugzeughersteller vorgegebene, Fahrzyklen die im Bugfahrwerk auftretenden Kräfte, in Größe und Häufigkeit, ermittelt. Dies ist die Basis für die Zulassung des Schleppers für ein bestimmtes Flugzeugmuster.

Aufgabe der Erfindung ist es, eine Überlastsicherung für stangenlose Flugzeugschlepper zu schaffen, die hinsichtlich Aufbau und Wirkungsweise einfacher ist als die bisher verwendeten elektronischen und hydraulischen Überwachungseinrichtungen. Eine derartige Überlastsicherung sollte aber selbstverständlich hinsichtlich ihrer Zuverlässigkeit die Vorschriften der Überwachungsstellen, die für die Zulassung der Inbetriebnahme von stangenlosen Flugzeugschleppern zuständig sind, erfüllen.

Die Lösung dieser Aufgabe erfolgt mit den im kennzeichnenden Teil der selbständigen Ansprüche 1 und 2 sowie einem Unteranspruch angegebenen Merkmalen.

Bei den Überlegungen, die schließlich zu der vorliegenden Erfindung geführt haben, hat der Erfinder sich zunächst nach Überlastsicherungen an Flugzeugschleppern mit Schleppstange umgesehen.

In der Patentliteratur und auch in der Praxis sind eine Reihe von Überlastsicherungen für die Schleppstangen von Flugzeugschleppern bekannt, die mit einem oder mehreren Scherbolzen als Sicherungselemente arbeiten.

Überlastsicherungen für Schleppstangen von Flugzeugschleppern des Standes der Technik, wie sie beispielsweise in dem DE-GM 86 05 706 beschrieben werden, gaben dem Erfinder gewisse Anregungen zur Lösung der o.g. Aufgabe, ohne jedoch den Lösungsweg aufzuzeigen.

Bei einer in der o.g. Druckschrift erwähnten Flugzeugschlepper-Schleppstange sind ein gabelförmiges Verbindungsstück sowie ein darin eingreifendes Paßstück über zwei Bolzen miteinander verbunden. Der eine Bolzen ist als Scherstift ausgebildet, der bei Überlast abschert. Der andere Bolzen ist als ein die Verbindung von Paßstück und Verbindungsstück beim Abscheren des Scherstiftes sichernder Fangbolzen ausgebildet. Um die beim Schleppen eines Flugzeuges entstehenden Zug- und Druckkräfte praktisch ausschließlich über den Scherstift zu übertragen, ist der Fangbolzen im Paßstück in einem in Längsrichtung der Schleppstange ausgerichteten Langloch gehalten.

Für diese und ähnliche Überlastsicherungen an Schleppstangen für Flugzeugschlepper dürften in der Regel ohne besondere Probleme von den zuständigen Überwachungsstellen der Flugzeughersteller oder Fluglinien Betriebszulassungs-Genebmigungen ausgestellt werden.

Die Grundidee der Überlastsicherungen des Standes der Technik für Schleppstangen besteht somit darin, daß die Verbindung zwischen dem Bugfahrwerk eines Flugzeuges und dem das Flugzeug ziehenden oder drückenden Flugzeugschlepper, nämlich die Schleppstange, doppelt gesichert wird. Nach Abscheren eines entsprechend dem maximal zulässigen Bugfahrwerk-Belastungswert ausgelegten Scherbolzens erhält ein stärker dimensionierter Fangbolzen die Verbindung Flugzeugschlepper-Bugfahrwerk zunächst aufrecht, wobei selbstverständlich vorausgesetzt wird, daß nach dem Abscheren des Scherbolzens eine Überprüfung des überlasteten Bugfahrwerkes stattfinden muß.

Nach einer bevorzugten Ausführungsform wird erfindungsgemäß (entsprechend dem unabhängigen Anspruch 2) nun bei einem stangenlosen Flugzeugschlepper, beispielsweise einem Schleppers nach der DE 43 22 985 A1, der EP 0 269 685 B1 oder auch nach der DE 41 29 407 C2 innerhalb jedes Teleskoparmes der Aufnahmevorrichtung für das Bugfahrwerk eines Flugzeuges eine Überlastsicherung in Gestalt eines Scherbolzens angeordnet. Zusätzlich ist innerhalb jedes Teleskoparmes ein Sicherungsbolzen vorgesehen. Wird nun während der Fahrt des Flugzeugschleppers mit über das Bugfahrwerk aufgenommenem Flugzeug die für das Bugfahrwerk des jeweiligen Flugzeuges maximal zulässige Zug- oder Druckkraft überschritten, so brechen die Scherbolzen und die Zylinderkolbenstangen der Teleskoparme können sich in Längsrichtung des Flugzeugschleppers um ein bestimmtes Maß (z.B. ca. 20 mm) in beiden Richtungen innerhalb des Zylinderrohres frei bewegen. Die jeweilige Bewegung wird durch Anschläge begrenzt.

Die Anwendung dieses Sicherungsprinzips ist selbstverständlich nicht auf Flugzeugschlepper ohne Schleppstange eines Herstellers beschränkt, der u.a. Inhaber der o.g. Schutzrechte ist, sondern dieses Prinzip kann mit gewissen Abwandlungen auch für stangenlose Flugzeugschlepper anderer Fabrikate verwendet werden.

Das Überlastsicherungsprinzip eignet sich demnach für alle stangenlosen Flugzeugschlepper, die mit einer Aufnahmekinematik für das Bugfahrwerk eines Flugzeuges ausgerüstet sind, d.h. für Flugzeugschlepper mit Teleskoparmen zum Ergreifen des Bugfahrwerkes und mit einer Schaufel oder Rampe, auf die das Bugfahrwerk für den Transport des Flugzeuges aufgesetzt wird. Allgemein ausgedrückt, ist nach diesem Prinzip und dem Patentanspruch 1 zwischen dem Rahmen des Flugzeugschleppers und der Aufnahmekinematik für das Bugfahrwerk eine Überlastsicherung in Gestalt eines Scherbolzens angeordnet. Bei Überlast, verursacht durch Zug- oder durch Druckkräfte, die die für das Bugfahrwerk maximal zulässigen Belastungswerte überschreiten, und nach Abscheren des Scherbolzens kann sich die Aufnahmekinematik innerhalb des Flugzeugschleppers und in Längsrichtung desselben um ein bestimmtes Maß in beiden Richtungen frei bewegen. Die Bewegung der Aufnahmekinematik ist durch Anschläge in jeder Bewegungsrichtung begrenzt.

Zweckmäßigerweise wird das Abscheren des Scherbolzens mit Hilfe einer Übverwachungseinrichtung akustisch oder optisch überwacht.

Ein Ausführungsbeispiel der Überlastsicherungssicherungseinrichtung für stangenlose Flugzeugschlepper wird nachstehend anhand von Schemazeichnungen näher erläutert. Es zeigen:
- Fig. 1: eine Draufsicht einer BugfahrwerkBugfahrwerk-Aufnahmevorrichtung und
- Fig. 2: einen Schnitt durch die Überlastsicherungseinrichtung innerhalb der Aufnahmevorrichtung (Einzelheit "A" aus Fig. 1).

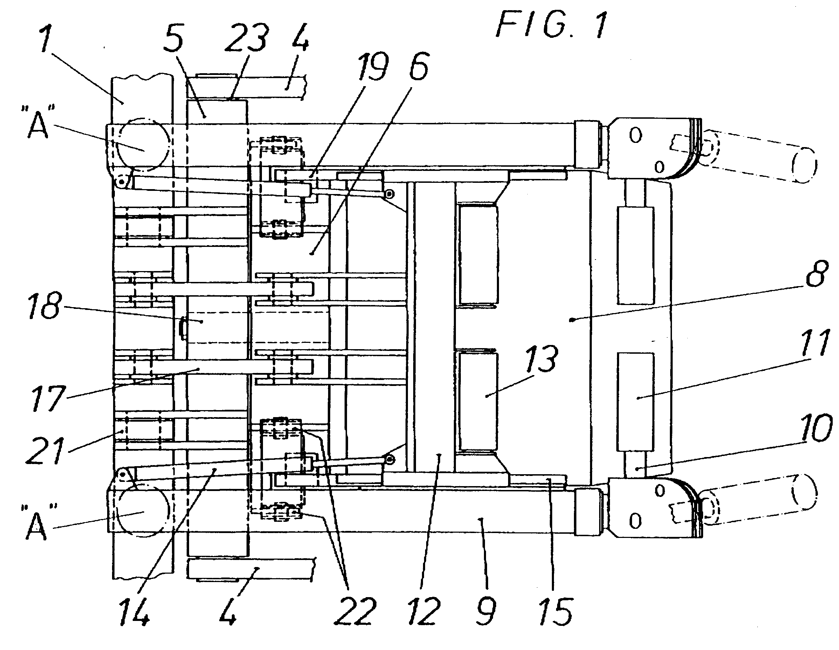

In Fig. 1 erkennt man die Aufnahmevorrichtung für das Bugfahrwerk eines Flugzeuges in der Draufsicht. In diesem Beispiel ist der Flugzeugschlepper ein Fahrzeug nach der DE 43 22 985 A1.

Zu sehen sind u.a. ein Teil des Fahrgestell-Vorderteils (1), Koppelglieder (4) zur Kopplung der Aufnahmevorrichtung mit den Hubschwingen des Fahrgestell-Hinterteils, eine Quertravere (5), eine Pendeltraverse (6), die Hubplattform (7), deren Unterstützungsfläche (8), die Teleskoparme (9), die Greifarme (10) an den Teleskoparmen, die sogenannte Push-Out-Traverse (12), die Verschiebeeinrichtung (14) für die Push-Out-Traverse, drehbare Rollen (13) an der Push-Out-Traverse, der Pendelbolzen (18), Längslenker (17). Im einzelnen wird auf die Beschreibung in der DE 43 22 985 A1 hingewiesen.

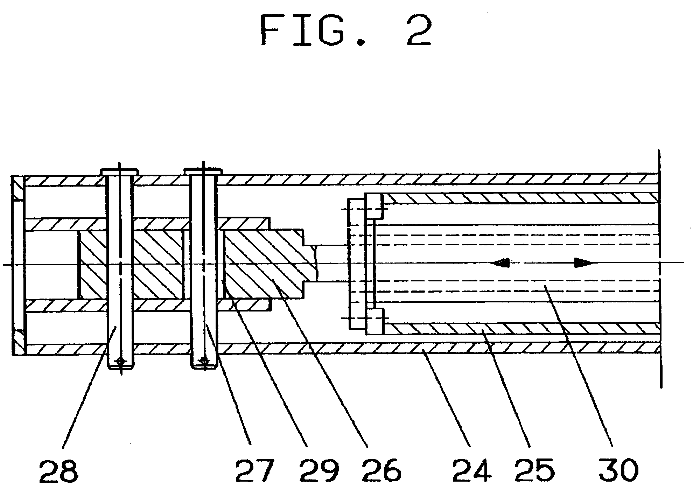

Fig. 2 zeigt die Überlastsicherungseinrichtung im Schnitt. Innerhalb der (hier nicht insgesamt dargestellten) beiden Teleskoparme (9) der Aufnahmevorrichtung für das Bugfahrwerk ist die Überlastsicherung in Gestalt eines Scherbolzens (28) angeordnet. Dieser Scherbolzen (28) ist durch das äußere Rohr (24) des Teleskoparmes und die Zylinderkolbenstange (26) hindurchgesteckt.

Ein zusätzlicher Bolzen, der Sicherungsbolzen (27), der selbstverständlich stärker ausgelegt ist als der Scherbolzen (28), wird ebenfalls durch das äußere Rohr (24) des Teleskoparmes und durch eine, in diesem Fall mit einem Sicherheitsspiel (29) versehene Ausnehmung in der Zylinderkolbenstange (26) gesteckt.

Beide Bolzen (27, 28) weisen an einem Ende Bolzenköpfe und am anderen Ende Splintsicherungen auf. Die Verbindung vom äußeren Rohr (24) des Teleskoparmes und der Teleskopspitze (25) des Teleskoparmes wird dargestellt durch die Zylinderkolbenstange (26) und das Zylinderrohr (30).

## Patentansprüche

1. Überlastsicherung für ein von einem stangenlosen Flugzeugschlepper aufgenommenes Bugfahrwerk eines Flugzeuges,
dadurch gekennzeichnet,
daß zwischen dem Rahmen des Flugzeugschleppers und der Aufnahmekinematik für das Bugfahrwerk eine Überlastsicherung in Gestalt eines oder mehrerer Scherbolzen, entsprechend der jeweils zulässigen Bugradlast angeordnet ist und,
daß bei Überlast, verursacht durch Zugkräfte oder durch Druckkräfte, die die für das Bugfahrwerk maximal zulässigen Belastungswerte überschreiten, und nach Abscheren des Scherbolzens sich die Aufnahmekinematik innerhalb des Flugzeugschleppers und in Längsrichtung desselben um ein bestimmtes Maß in beiden Richtungen frei bewegen kann, wobei die Bewegung der Aufnahmekinematik durch Anschläge in jeder Bewegungsrichtung begrenzt ist.

2. Überlastsicherung für ein von einem stangenlosen Flugzeugschlepper aufgenommenes Bugfahrwerk eines Flugzeuges,
dadurch gekennzeichnet,
daß bei dem Flugzeugschlepper innerhalb der Teleskoparme (9) der Aufnahmevorrichtung für das Bugfahrwerk eines Flugzeuges eine Überlastsicherung vorgesehen ist,
daß diese Überlastsicherung aus Scherbolzen (28), besteht, ausgelegt entsprechend der jeweils zulässigen Bugradlast, wobei die Scherbolzen (28) über Zylinderkolbenstangen (26) und Zylinderrohre (30) die Teleskopspitzen (25) sichern,
daß zusätzlich jeweils ein Sicherungsbolzen (27) mit einem Sicherheitsspiel (29) innerhalb jeder Zylinderkolbenstange (26) vorgesehen ist,
daß bei Überlast, verursacht durch Zugkräfte oder durch Druckkräfte, die die für das Bugfahrwerk maximal zulässigen Belastungswerte überschreiten, und nach Abscheren der Scherbolzen (28) sich die Zylinderkolbenstangen (26) innerhalb des Sicherheitsspieles (29) in den Zylinderrohren (30) in Längsrichtung des Flugzeugschleppers um ein bestimmtes Maß in beiden Richtungen frei bewegen können.

3. Überlastsicherung nach Anspruch 2,
dadurch gekennzeichnet,
daß die Scherbolzen (28) innerhalb der Teleskoparme (9) von außen einbringbar sind und die Ausnehmungen zur Aufnahme der Scherbolzen (28) für Scherbolzen (28) unterschiedlicher Durchmesser, entsprechend dem jeweils maximalen Bugfahrwerk-Belastungswert, ausgelegt sind und,
daß die Köpfe der Scherbolzen (28) eine unterschiedliche Gestalt, kennzeichnend den jeweils aufzunehmenden Flugzeugtyp, aufweisen,
daß eine Abtasteinrichtung vorgesehen ist, die den Scherbolzen-Kopf abtastet und dem Fahrer des Flugzeugschleppers einen entsprechenden Flugzeugtyp-Code optisch anzeigt.

4. Überlastsicherung nach den Ansprüchen 1 bis 3,
dadurch gekennzeichnet,
daß die Überlastsicherungseinrichtung mit einer Einrichtung verbunden ist, die bei Abscheren des Scherbolzens für den Fahrer des Flugzeugschleppers ein optisches oder akustisches Signal auslöst.
